# EUROPEAN PATENT SPECIFICATION

(11) **EP 2 205 389 B1**
(45) Date of publication and mention of the grant of the patent: **08.06.2016**
(21) Application number: 08833337.2
(22) Date of filing: 26.09.2008
(51) Int. Cl.: B23D 57/00, B28D 1/00

(54) **DEVICE FOR SUPPORTING, DRIVING AND TRANSMITTING MOTION TO A DIAMOND WIRE OF A MACHINE FOR CUTTING STONES**
VORRICHTUNG FÜR UNTERSTÜTZUNG, ANTRIEB UND/ODER ÜBERTRAGUNG VON BEWEGUNG AUF EINEN DIAMANTDRAHT VON GESTEINSSCHNEIDEMASCHINEN
DISPOSITIF POUR SUPPORTER, ENTRAÎNER ET/OU TRANSMETTRE UN MOUVEMENT À UN FIL DIAMANT SUR DES MACHINES DESTINÉES À COUPER DES PIERRES

(30) Priority: 28.09.2007 WO PCT/IT2007/000683; 08.02.2008 IT MO20080039
(43) Date of publication of application: 14.07.2010
(73) Proprietor: Pedrini SpA ad Unico Socio, 24060 Carobbio degli Angeli (BG) (IT)
(72) Inventor: PEDRINI, Luigi, "deceased" (IT)
(74) Representative: Gasparini, Alberto
(86) International application number: PCT/IT2008/000618
(87) International publication number: WO 2009/040870

(56) References cited:
- WO-A-99/00210
- ES-A- 2 172 393

## Description

### Technical field

The present invention relates to a device for the support, and/or drive of diamond wire of machines for cutting natural or agglomerate stones according to the preamble of claim 1.

Prior art

Such a device is known from WO 9 900 210 A1.

The prior art already includes, on machines with rings in diamond wire, transmission of motion carried out by starting with motorised pulleys or drums provided with grooves coated in soft material for the housing of the single diamond wire. Also the return pulleys and drums need the grooves to be coated in the said soft material in order to reduce the contact wear and tear of the diamond wire and the groove of the drum or pulley.

Diamond wire is comprised of a steel wire with several strands on which inserts in diamond material with a greater diameter are anchored at pre-determined distances. The diamond wire actually carries out the cutting of the natural or agglomerate stone by the diamond material rubbing and then cutting inside the stone, which is often very hard, whereas the steel wire only has the functions of support, motion and tightening.

Therefore, the cross-section of the wire is not constant and in wrapping the wire around the grooves of the pulleys, wheels and/or drums represents irregular contact as the inserts and sections of wire between them cannot be in contact with it at the same time. To solve this problem, the prior art uses various types of groove in the pulleys or drums coated in soft material so as to minimise the effect of the irregularity due to the different diameters of the wire and diamond inserts. All the solutions proposed include the assembly of soft coating material, to compose the grooves themselves or also to only coat the grooves, which is fixed to the winding pulley or drum.

In the prior art it is known that with use, the diamond inserts act on the groove coating material, damaging it and requiring it to be replaced before the harder material of the pulley or drum, which is usually metal, is damaged, causing considerable problems to the tightening of the diamond wire and regularity in cutting by the wire itself in the stone block being worked upon. Therefore, the groove coating material must remain in contact with the wheel, drum or pulley on which it is mounted and the prior art includes the vulcanization of the material, when rubber-based. In this way, the material is placed around the wheel, drum or pulley and hardened when in position by vulcanization in the specific curve required so as to make it adhere firmly onto it.

After it has been used for some time, the soft material is gradually worn down and its replacement becomes necessary, as mentioned above, so after removal and replacement it must be vulcanized again. This operation is difficult to carry out, as it must be done on the assembled wheel, drum or pulley. If, as is often the case, the machine is not near the workshop where the vulcanization is carried out, there may be considerable transport costs for the pulley, wheel or drum to be included in the replacement of this soft coating material.

In the specific prior art for drums for multiple diamond wires the Italian patent IT 1309685 is known, which describes a way to make the said soft drum groove coating material easily replaceable. The coating of the grooves is actually achieved with an annular band inserted into the metal grooves of the drum so as to be placed between the diamond wire and the groove in order to avoid direct contact. The replacement of the annular bands can be done with the drum assembled on the block cutting machine with rings in diamond wire.

However, this solution requires the construction of the metal grooves of the drum at pre-determined distances, but which are necessary and sufficient to keep the metal parts between a groove and its adjoining ones, limiting the minimum thickness of the slabs that can be obtained by cutting with two adjoining diamond wires to high values or limiting the cutting to only multiples of the said distance.

Finally, the solution of the technical problem presented in the previous patent is limited to a particular type of machine with diamond wires, which is the one with four drums at the top of the ring that is held during cutting, whereas experience recommends using the drums at the maximum diameter possible in order to prolong the duration of the steel part of the wire. Indeed, drums with a small diameter, from 1.0 to 1.3 metres, stress the wire considerably when it is curved, whereas drums with a large diameter stress it less and, from experience, it has been noted that much longer duration can be achieved if diameters greater than 2 metres are used. The work required of large diameter drums does not allow easy the manufacture and inexpensive transport of drums that are provided with grooves with the said annular bands.

This prior art is subject to considerable improvement with regard to the possibility of producing a device for the support, drive and/or transmission of motion to a diamond wire that overcomes the said drawbacks and permits the greatest possibility for housing the diamond wires at the required gauge.

Therefore, the technical aim that this invention is based on is to embody a way to support, guide and/or transmit rotation motion to the diamond wire rings, in a simple, effective and inexpensive way, given that the prior art indicates that in the wear of the support, drive and/or transmission grooves for the diamond wire there is also considerable wear of the machine parts. Furthermore, as it will be required to be more practical in terms of maintenance, the said device will also allow the user to carry out replacement more inexpensively with respect to the operations that must currently be carried out with the prior art.

Even if not less important, a further technical problem is to be found in the possibility of placing the diamond wires at the required gauge to allow the slabs to be cut to the required thickness, at the same time maintaining the cost-effectiveness of the maintenance operation mentioned above.

### Summary of the invention

This invention solves the above-mentioned technical problem, with a device for the support, and/or drive of diamond wires of machines for cutting natural or agglomerate stones according to claim 1.

Further preferred embodiments are defined by the features of dependent claims 2-11.

### Brief description of the drawings

- Figure 1 shows a schematic perspective view of a device for the support and transmission of cutting motion to rings in diamond wire, in accordance with the invention in a first embodiment with an annular tape and grooves, comprising all the grooves for the diamond wires of the machine, and a tape tightener;
- Figure 2 shows a schematic perspective view of a further device for the support and transmission of cutting motion to rings in diamond wire, in a second embodiment of the invention with several annular tapes or bands with grooves alongside each other and a tightener for the annular tapes or bands;
- Figure 3 shows a schematic perspective view of the second embodiment where there are 6 annular bands with 10 grooves alongside each other within the width of the drum;
- Figure 4 shows a schematic section along a diametral plane of the drum shown in Figures 2 and 3;
- Figure 5 shows a schematic enlarged view of part of the section shown in Figure 4, in order to illustrate the reciprocal positions of the annular tapes or bands with the respective grooves on the surface of the drum;
- Figure 6 shows a limited schematic view and partial section of a third embodiment of the invention, where the drum is provided with annular trapezoidal grooves and the covering is composed of a trapezoidal belt with a groove inside for housing a diamond wire;
- Figure 7 shows a schematic section of a tightener for the annular tapes or bands of the second embodiment of the invention;
- Figure 8 shows a schematic section of a tightener, similar to the one shown in Figure 7, but for double the number of annular tapes or bands with grooves: the tightener is double with independent support and adjustment means.

### Detailed description of a preferred embodiment

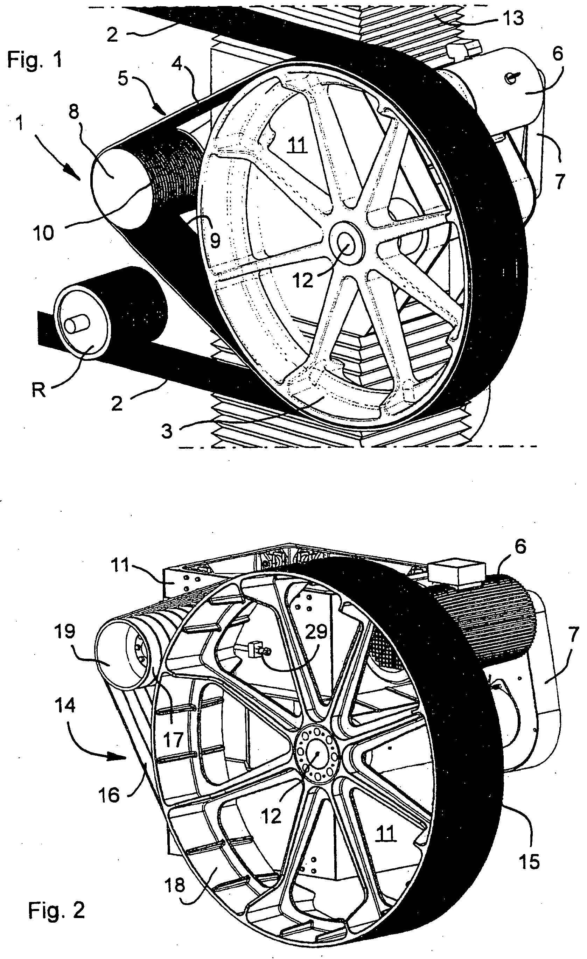

Figure 1 shows a wheel device for the support, drive and transmission 1 of cutting motion to rings in diamond wire 2, it also shows the wheel 3 around which an annular tape 4 is wound, in accordance with this invention in a first embodiment, on the surface of which there are grooves 5, for housing the wires 2 of rings in diamond wire; the grooves are equidistant to enable the positioning at the gauge required of the diamond wires of the rings. The rotating motion is generated by an electric motor 6 and, by means of the transmission 7, the rotation is transferred to the wheel 3 and then the annular tape 4, which due to the winding on the wheel 3 of the diamond wires transfers the cutting motion to them. A wheel 8, or tightener, for tightening the annular tape is distanced from the wheel 3, to tighten the annular tape 4, moving the axis with respect to the rotation axis of the wheel. To maintain the lateral position, the annular tape 4 has profiles 9 that are longitudinal to the movement on its inner surface. Near the wheel 8, or tightener, and the wheel 3 there are circumferential grooves 10 to house the said profiles 9.

Figure 1 also shows the slide 11 for the rotation support of the axis 12 of the wheel 3. The slide is mobile as described in the prior art on a column 13 of the machine for cutting blocks of natural or agglomerate stone with diamond wires. On the shaft of the diamond wires 2 near the block being worked upon, which is not shown, there is a regular roller R with grooves, for the rotation of the said wires, so as to cause the rotation of the respective wire and present a new cutting section of the diamond inserts in the subsequent passage of the wires within the cuts in the block being worked upon.

Figures 2, 3, 4 and 5 show a second embodiment of the device for the support, drive transmission 14 where, using the same references for identical parts, the grooves 15 are cut on the outer surface of the annular bands 16, similarly to flat belts, wound in wide grooves 17 in the wheel 18 and the wheel 19, or tightener, for tightening the annular bands. The grooves 15 are positioned at a gauge of P/3 on the singular annular band, where in every distance P there are three grooves; while between two adjoining bands the minimum gauge is P, which is also the minimum between the diamond wires of two adjoining rings for cutting slabs to the minimum thickness permitted by the machine. In this way, it is possible to distance the wires by 1/3 of P for every groove, enabling cutting of slabs with thicknesses that are multiples of P, but also of adjoining slabs with a thickness of 1/3 or 2/3 greater than the thickness obtained using the single distance P.

Therefore, in cutting the slab between the diamond wires, held between two grooves 15 of the ends of annular bands 16 which are different but alongside each other, the thickness can be the minimum referred to by the distance P between the diamond wires. However, by using the annular tape 4 with grooves 5 shown in Figure 1 and maintaining the distance among three grooves equal to P, as the tape is a single part, the limitation of the minimum thickness is not present in certain points of the band of rings in diamond wire and therefore the winding distance of the diamond wires of adjoining rings is determined by the minimum thickness that can be obtained for the slabs depending on the material being worked upon and the diamond wire used.

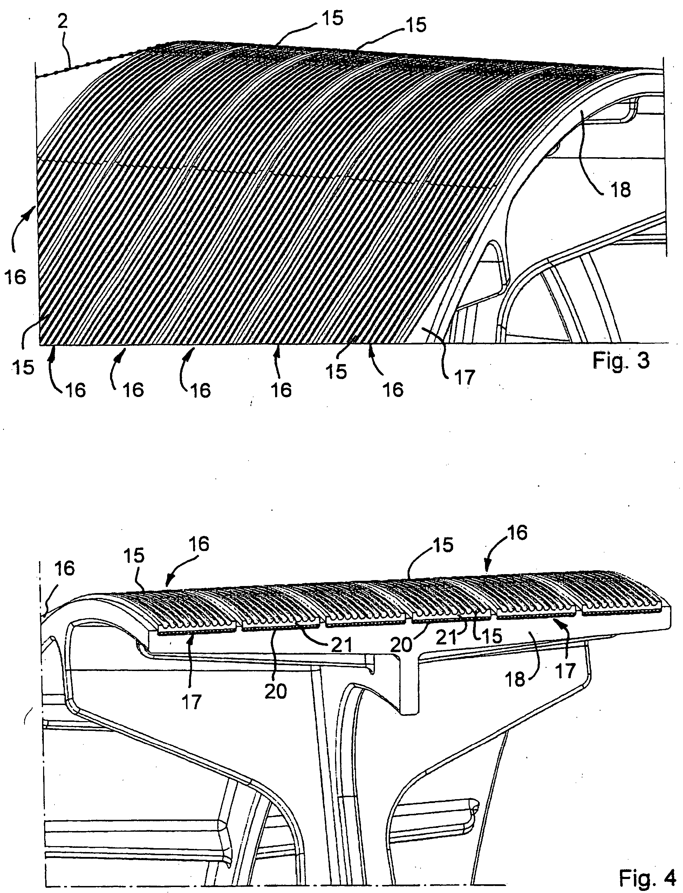

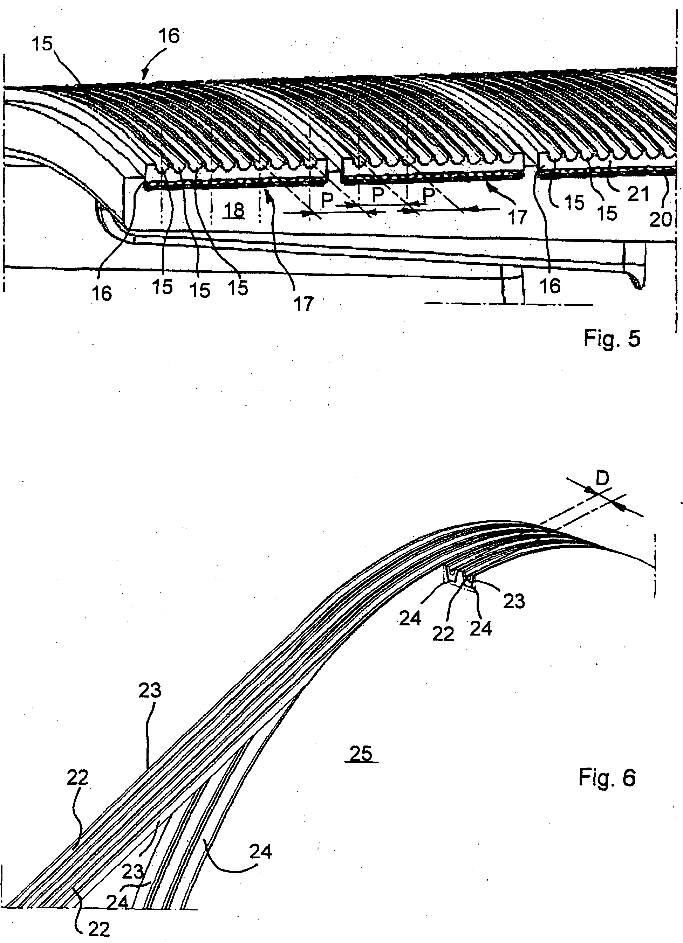

Figures 4 and 5 show the section of the annular band 16 with grooves 15 on the outer surface. The band is actually composed of a strip 20 near the inner surface, in contact with the wide grooves 17 in which there are many reinforcement wires to resist the traction stress acknowledged in the prior art in all belts. On the outside of the strip 20 there is a thick layer in soft elastic material 21, which is advantageously vulcanized rubber, in which the said grooves 15 are cut.

Figure 6 very schematically shows a third embodiment where the single groove 22 is cut inside a belt 23, advantageously with a trapezoidal profile, which is inserted into and coupled with annular grooves 24 in the wheel 25 and in the tightener, which is not shown here and which is also a trapezoidal shape. The grooves are therefore placed at a distance D which is dictated by the gauge between the grooves 24 on the wheels. The resulting minimum thickness of the slab that can be obtained is determined by the said distance D and the characteristics of the diamond wires of the rings used.

This embodiment can also be used on pulleys with a single groove 24, or rather for single diamond wires, which is not shown. The tightening of the belt 22 can be obtained by using a special tightening pulley or by tightening the belt between two adjoining pulleys, with either both of them driven or just one of them driving.

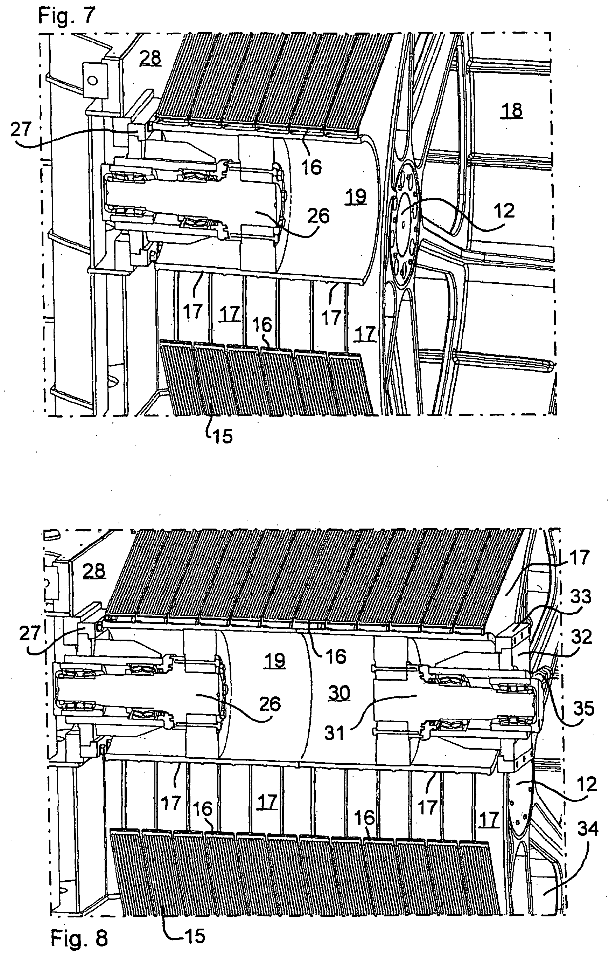

Figures 7 and 8 show a schematic axial section of the tightener wheel for the tape, belts and annular bands shown here. The wheel 19, or tightener, is supported in rotation by an idler pin 26 made to rotate on an adjustable support 27, for the tightening of the annular bands 16, with respect to the slide 28; during adjustment the pin 26 is moved radially from the axis 26 of the wheel 18, sufficiently for the tightening of the annular bands 16 held. The adjustment is carried out with a regular nut and screw 29, as shown in Figure 2.

When using many annular bands 16 in double the number with respect to the previous figures, as shown in Figure 8, their tightening is doubled by using also a wheel 30, which is specular to the wheel 19, which is also supported in rotation by an idler pin 31 made to rotate on an adjustable support 32 with respect to the slide 28. A support shelf 33 is placed between the wheels 19 and 30, or tighteners, and the wheel 34, which is similar to the wheel 18, but provided with double the number of grooves 17: the said shelf enables the adjustable support 32 to be moved with respect to the slide 28 by the distance necessary for the tightening of the annular bands 16 held. The adjustment is carried out by the radial movement from the axis 12 of the wheel 34, tighteners or wheels 19 and 30; indeed, the adjustment of the wheel or tightener 30 is carried out using a regular nut and screw 35, which is shown in the Figure, similar to the said nut and screw 29 for the adjustment of the other wheel or tightener 19.

On completion of the solutions proposed here, in the case of many annular bands 16, in accordance with the invention, a single idler pin is made which supports a single wheel similarly to the wheel 19, which is not shown in the Figures, but in turn is supported on both ends on a single adjustable support on the said slide 28. This solution, with respect to the one shown in Figure 8, is easier to manufacture, even if the annular bands are tightened using a single adjustment, therefore accepting slight differences in tightening among the bands themselves.

The devices for the support, and/or drive of motion to diamond wires on machines for cutting natural or agglomerate stones described here work as indicated below.

The device for support, drive and transmission in the third embodiment shown in Figure 6, which has the simplest and most versatile composition in the invention, works like a trapezoidal belt where on the inside of the belt 23 a single diamond wire is housed, therefore the construction of pulleys 25 with a single annular groove is possible, or rather for a single wire, or pulleys/drums with few or many annular grooves 24, alongside each other as shown in the Figure. The wire 2, which rests on the soft material of the groove 22 cut in the belt 23, creates an indirect contact with the harder material of the pulley or drum 25 on which the single or multiple annular grooves 24 are cut. The tightening, as described above, is carried out by using a special wheel positioned on the inside of the ring of the belt 23 and which is moved away from the rotation axis of the pulley or drum, in order to increase the distance of the wheelbase and tighten the shafts of the belt to the value required. Then, in the case of multiple pulleys or drums with multiple annular grooves, to support, drive and/or transfer the motion to a multiplicity of diamond wires 2, the tightener wheel or tightener, can be made similarly to the wheels 19 and/or 30 but, naturally, with grooves 24 with a trapezoidal section to house the said belts 23.

The rubber used in the manufacture, of the belts 23 can easily be vulcanized during production, as the overall dimensions and transport of the belts are similar to that of regular trapezoidal belts. This means that they are very easy to manufacture, transport and maintain.

Further still, the device for the support, drive and transmission 14 of the second embodiment shown in Figures 2 to 5 works in a similar way to the previous embodiment with the belt 23 and groove 22, but enables greater freedom in positioning the wires 2 of the rings in diamond wire at distances that are not only double the wheelbase between the annular grooves 24 for the said belts. The annular band 16 has a similar composition to that of a belt with the inner layer 20 provided with reinforcement wires for the support of the tightening of the band itself, while the outer layer 21 is sufficiently thick to enable the housing of the grooves for the diamond wires. The rings of the bands 16 can be easily manufactured in the way known in the prior art for belts. With use the grooves 15 of the annular bands 16 may be worn which makes the replacement of the single band necessary or also of all the annular bands present on the machine if the wear is more uniform.

On the other hand, with an annular band 16 composed of an inner reinforcement layer 20 and an outer layer 21, for the grooves for housing the diamond wires, it is easy to check the wear of the grooves 15 for the diamond wires that is taking place. Indeed, by making the layer with reinforcement wires 20 out of lighter material, which is made easier by the presence of the reinforcement wires, and the outer layer 21 in black vulcanized rubber, the gradual wear in the grooves is highlighted very well by the wear of the outer layer 21 at the bottom of the grooves, where the lighter material, and in particular the reinforcement wires, is visible, so it is immediately easy to see which are the belts with grooves which require service. This differentiation of the layers is possible to achieve also on the single belt and on the annular tape for a multiplicity of diamond wires. Furthermore, in the contact between the diamond wires and the outer layer 21 the wear is greater whereas there is less wear to the reinforcement wires of the inner layer 20, due to the greater resistance to wear provided by the said reinforcement wires and the material of the layer.

Similarly to the belt with a single groove, maintenance is facilitated, with respect to the prior art, as it is not necessary to carry out vulcanization treatments on the drum or pulley, but the annular band, like the belt, can be easily rolled up and sent to anywhere in the world very inexpensively.

Finally, the first embodiment of the device for the support, drive and transmission 1 of motion to the rings in diamond wire 2 as shown in Figure 1 works by tightening the annular tape 4, on the outer surface of which there are grooves 5, which enable the support, and/or drive of rotation and cutting-motion to the rings in diamond wire 2. Furthermore, drive in the lateral position of the annular tape 4 on the wheel 3 and on the wheel 8, or tightener, is facilitated by the profiles 9 present on the inner surface of the tape. The profiles 9 are coupled on the surface of the wheel 3 and the wheel or tightener, 8 in the circumferential grooves 10 present on them, so as to increase adhesion and avoid slipping and/or lateral movement. Therefore manufacture of the wheel 3 is simple, as it does not require cutting of grooves on it for the housing and drive of the rings in diamond wire 2, nor the formation of grooves with vulcanized rubber on it, as the said functions are transferred to the annular tape 4 provided with grooves 5 on its outer surface, similarly to the annular bands 16 in the second embodiment. Wear, due to contact between the diamond inserts of the wire and the groove, is completely concentrated on the grooves in the tape, so as to require maintenance only to the said tape, even with scheduled replacement of the annular tape.

The maintenance of machines in distant locations can therefore be easily carried out as it is not necessary to modify or operate on the pulleys, wheels or drums described above. The grooves 5, 15 or 22, which are worn and/or damaged by contact with the diamond inserts of the rings of the wire 2, are not applied to the surface of the part inside: pulley, wheel or drum, but on the belt 23, annular band 16 or annular tape 4, which are easy to fold and collapse, unlike the pulley, wheel or drum which can advantageously be manufactured in a single piece and delivered whole even if manufactured with a diameter that may even be over 2.5 metres. Therefore, during maintenance, it is sufficient to send one or more new belts, annular bands or annular tapes and assemble them. These may be manufactured using specific technology, that is, with vulcanization of the rubber that they are advantageously made of, so as to avoid the same operation on the pulley, wheel or drum for the vulcanization of the coatings for the grooves in rubber, which are currently known in the prior art.

Therefore, the advantages of this invention can be summarised as: considerable manufacturing simplification as it is no longer necessary to produce pulleys, wheels or drums with coating in soft vulcanized material to make the duration of their use with the diamond wires known in the prior art sufficiently long. Furthermore, the part where the contact wear between the wheel, pulley or drum for the support and/or drive is concentrated is the belt with groove, annular band with groove or annular tape with groove which houses the diamond wire(s) and concentrates the contact wear. Further still, the maintenance of the pulleys, wheels or drums included in the invention is greatly facilitated by just being able to change and replace the belt, annular band or annular tape of the invention extremely easily, that is, like a regular trapezoidal or flat transmission belt known in the prior art. This ease of maintenance leads to further economy in the maintenance of the machine, as it is possible to transport just the said belts, annular bands or annular tapes of the invention to be able to carry out the maintenance. As mentioned in the description, the belts, annular bands or annular tapes can be folded, collected and rolled up in the way known in the prior art for the transport of transmission belts so as to considerably reduce the dimensions of the material that is transported for maintenance.

What has been described above enables considerable simplification of the manufacture and management of machines for cutting blocks of natural or agglomerate stone with a multitude of diamond wires, so as to allow large scale economy in manufacture and maintenance, even if pulleys, wheels or drums with large diameters are used, and achieve long-term use of the diamond wires of the rings.

Naturally, many modifications may be made to the device for the support, and/or drive of diamond wire on machine for cutting natural stone described above by technicians that are specialised in the field, in order to comply with specific and contingent needs, all of which, however, are included within the scope of protection of the present invention as defined by the following claims.

Besides, even if less advantageously, the invention as described above may be applied to a pulley, wheel or drum to be used just for the return of the diamond wire, or rather, the belts, the annular bands or the annular tape are used as a mobile coating for the driven pulleys, wheels or drums and not motors or motorised, for the support and drive of one or more diamond wires.

Therefore in a further variation of the invention, even if less advantageously than what has been described, the motorisation of the rings in diamond wire is carried out with the rotating motion generated by an electric motor that transfers it to the wheel for the return and tightening of the belt, annular band or tape, so the said drive transfers the motion to the diamond wire/wires that is/are wound around the pulley, wheel or drum around which the said belt, annular band or tape is wound.

## Claims

1. Device for the support and/or drive of diamond wire (2) of machines for cutting natural or agglomerate stones, comprising: at least one pulley, wheel or drum for support and/or drive, provided with at least one groove for holding at least one diamond wire (2) for cutting and a soft material placed between the diamond wire and the pulley, wheel or drum, said soft material having at least one groove for holding at least one cutting diamond wire; **characterised by** the fact that the soft material (4; 16; 22) is wrapped around the pulley, wheel or drum (3; 18; 25) but not fixed and is interposed in the winding of the diamond wire on the pulley, wheel or drum, along the winding arch, and is closed in a ring, similarly to a belt, with the winding of the said ring or belt also on a tightening wheel (8; 19; 30); furthermore, this tightening is achieved by using adjustment means (29; 35) for the tightening wheel to increase the wheelbase of the tightening wheel axis and the pulley, wheel or drum (3; 18) axis, for the support and/or drive of said diamond wire.

2. Device, in accordance with claim 1, wherein the pulley, wheel or drum (3; 18) also carries out the function of transmission of the cutting motion to the diamond wire wound around the pulley, wheel or drum.

3. Device, in accordance with either of claims 1 or 2, wherein the soft material wrapped in a ring comprises two portions or layers where the inner one (20), in contact with the pulley, wheel or drum, has functions of tightening and reinforcement with reinforcing wires embedded into said inner portion of said ring; the outer layer (21) has the function of compensating for the irregularity in the contact between the diamond wire and the winding groove (5; 15; 22).

4. Device, in accordance with any of claims 1, 2 or 3, wherein the ring of soft material is in the shape of a moulded belt (23) provided with a groove (22) on the external surface which is designed to couple with a special groove (24) cut into the said pulley, wheel or drum (25).

5. Device, in accordance with claim 4, wherein the moulded belt has inclined sides so as to provide a transversal section that resembles a trapezoid (23).

6. Device, in accordance with any of claims 1, 2 or 3, wherein the ring of soft material is in the shape of an annular tape (16) on the outer layer of which (21) there are equidistant grooves (15) for housing two or more diamond wires (2) at a distance (P) of at least what is necessary for cutting one or more slabs at the minimum thickness provided for by a machine with a plurality of adjacent cutting wires.

7. Device, in accordance with claim 6, wherein the equidistant grooves (15) are placed at a distance which is part (P/3) of the distance (P) between the diamond cutting wires of the minimum thickness slab provided for by the machine.

8. Device, in accordance with any of claims 1, 2 or 3, wherein the ring of soft material is in the shape of an annular tape (4) on the outer layer of which there are equidistant grooves (5) for housing at least two diamond wires (2) at a distance (P) of at least what is necessary for cutting one or more slabs at the minimum thickness provided for by a machine; on the tape there are grooves (5) for housing all the diamond wires for rings provided for on the machine.

9. Device, in accordance with any of claims 6 or 7, wherein the wheel or drum (18) has wide grooves (17) to house several annular bands (16) alongside each other so as to provide at least the distance (P) necessary between two grooves (15) of adjoining bands for cutting slabs to the minimum thickness provided for by the machine.

10. Device, in accordance with claim 9, wherein the annular tape (4) on its internal surface has longitudinal profiles (9) for coupling on corresponding circumferential grooves (10) present on the wheel or drum (3) and in the tightening wheel (8) in order to maintain its lateral position.

11. Device, in accordance with claim 9, wherein the annular bands (16) are tightened by at least two tightening wheels (19; 30) which can in turn be adjusted on a respective support (27; 33) by using different adjustment means (29; 35) each one acting to adjust its own wheelbase.

## Patentansprüche

1. Vorrichtung für die Unterstützung und/oder den Antrieb eines Diamantdrahtes (2) einer Schneidemaschine für natürliches oder agglomeriertes Gestein, umfassend: mindestens eine Rolle, ein Rad oder eine Trommel zur Unterstützung und/oder Antrieb, ausgestattet mit mindestens einer Rille zum Halten mindestens eines Diamantdrahtes (2) zum Schneiden und ein weiches Material, welches zwischen dem Diamantdraht und der Rolle, dem Rad oder der Trommel angeordnet ist, wobei das weiche Material mindestens eine Rille zum Halten mindestens eines Diamantschneidedrahtes aufweist, **dadurch gekennzeichnet, dass** das weiche Material (4; 16; 22) um die Rolle, das Rad oder die Trommel (3; 18; 25) gewickelt aber nicht fixiert ist und in die Windung des Diamantdrahtes auf der Rolle, des Rades oder der Trommel entlang des Windungsbogens eingefügt ist und zu einem Ring, ähnlich einem Riemen geschlossen ist, wobei die Windung des Ringes oder Riemens außerdem auf einem Spannrad (8; 19; 30) liegt und darüber hinaus das Spannen dadurch erreicht wird, dass Einstellungsmittel (29; 35) für das Spannrad verwendet werden, um den Achsenabstand der Spannradachse und der Rollen-, Rad- oder Trommelachse (3; 18) für die Unterstützung und/oder den Antrieb des Diamantdrahtes zu vergrößern.

2. Vorrichtung nach Anspruch 1, wobei die Rolle, das Rad oder die Trommel (3; 18) außerdem die Funktion der Übertragung der Schneidebewegung auf den um die Rolle, das Rad oder die Trommel gewickelten Diamantdraht verrichtet.

3. Vorrichtung nach Anspruch 1 oder 2, wobei das zu einem Ring gewickelte weiche Material zwei Abschnitte oder Schichten umfasst, wobei die mit der Rolle, dem Rad oder der Trommel in Kontakt stehende Innere (20) derselben Funktionen zur Spannung und Verstärkung mit Verstärkungs-drähten aufweist, die in den inneren Abschnitt des Ringes eingebettet sind und die äußere Schicht (21) die Funktion aufweist, die Unregelmäßigkeit im Kontakt zwischen dem Diamantdraht und den gewundenen Rillen (5; 15; 22) zu kompensieren.

4. Vorrichtung nach einem der Ansprüche 1, 2 oder 3, wobei der Ring aus weichem Material in Form eines geformten Riemens (23) ausgebildet ist und mit einer Rille (22) auf der externen Oberfläche ausgestattet ist, welche so gestaltet ist, dass sie sich mit einer speziellen Rille (24), welche in die Rolle, das Rad oder die Trommel (25) geschnitten ist, koppelt.

5. Vorrichtung nach Anspruch 4, wobei der geformte Riemen schräge Seiten aufweist, um einen transversalen Querschnitt bereitzustellen, welcher einem Trapezoid (23) gleicht.

6. Vorrichtung nach einem der Ansprüche 1, 2 oder 3, wobei der Ring aus weichem Material die Form eines ringförmigen Streifens (16) auf der äußeren Schicht (21) aufweist, auf welchem äquidistante Rillen (15) zum Aufnehmen von zwei oder mehr Diamantdrähten (2) in einem Abstand (P) ausgebildet sind, der zumindest dem entspricht, der notwendig ist, um eine oder mehrere Scheiben mit einer minimalen Dicke zu schneiden, die von einer Maschine mit einer Vielzahl von benachbarten Schneidedrähten vorgegeben ist.

7. Vorrichtung nach Anspruch 6, wobei die äquidistanten Rillen (15) in einem Abstand angeordnet sind, welcher ein Teil (P/3) des Abstandes (P) zwischen den Diamantschneidedrähten mit der durch die Maschine vorgegebenen minimalen Scheibendicke ist.

8. Vorrichtung nach einem der Ansprüche 1, 2 oder 3, wobei der Ring aus weichem Material in Form eines ringförmigen Streifens (4) auf der äußeren Schicht ausgebildet ist, auf welchem äquidistante Rillen (5) zum Aufnehmen von mindestens zwei Diamantdrähten (2) in einem Abstand (P) ausgebildet sind, der zumindest dem entspricht, der notwendig ist, um eine oder mehrere Scheiben mit einer durch eine Maschine vorgegebenen minimalen Dicke zu schneiden und auf dem Streifen Rillen (5) zum Aufbringen aller Diamantdrähte für die in der Maschine vorgesehenen Ringe ausgebildet sind.

9. Vorrichtung nach Anspruch 6 oder 7, wobei das Rad oder die Trommel (18) breite Rillen (17) aufweist, um mehrere ringförmige Bänder (16) nebeneinander aufzunehmen, um zumindest den notwendigen Abstand (P) zwischen zwei Rillen (15) angrenzender Bänder zum Schneiden von Scheiben mit durch die Maschine vorgegebener minimaler Dicke bereitzustellen.

10. Vorrichtung nach Anspruch 9, wobei der ringförmige Streifen (4) auf seiner inneren Oberfläche longitudinale Profile (9) zum Koppeln an korrespondierende umlaufende Rillen (10) aufweist, welche auf dem Rad oder der Trommel (3) und in dem Spannrad (8) vorhanden sind, um seine laterale Position aufrecht zu erhalten.

11. Vorrichtung nach Anspruch 9, wobei die ringförmigen Bänder (16) von mindestens zwei Spannrädern (19; 30) gespannt werden, welche ihrerseits auf einem jeweiligen Support (27; 33) durch Verwendung unterschiedlicher Einstellungsmittel (29; 35) verstellt werden, wobei jedes zur Anpassung des eigenen Achsenabstandes wirkt.

## Revendications

1. Dispositif pour le support et/ou l'entraînement d'un fil diamant (2) de machines pour couper des pierres naturelles ou agglomérées, comprenant : au moins une poulie, une roue ou un tambour pour le support et/ou l'entraînement, prévu(e) avec au moins une rainure pour maintenir au moins un fil diamant (2) pour la découpe ; et un matériau souple placé entre le fil diamant et la poulie, la roue ou le tambour, ledit matériau souple ayant au moins une rainure pour maintenir au moins un fil diamant de coupe ; **caractérisé en ce que** le matériau souple (4 ; 16 ; 22) est enroulé autour de la poulie, de la roue ou du tambour (3 ; 18 ; 25) mais non fixé et est intercalé dans l'enroulement du fil diamant sur la poulie, la roue ou le tambour, le long de l'arc d'enroulement, et est fermé en un anneau, similaire à une courroie, avec l'enroulement dudit anneau ou courroie également sur une roue de serrage (8 ; 19 ; 30) ; en outre, ce serrage est obtenu en utilisant des moyens d'ajustement (29 ; 35) pour que la roue de serrage augmente la base de roue de l'axe de roue de serrage et l'axe de la poulie, de la roue ou du tambour (3 ; 18), pour le support et/ou l'entraînement dudit fil diamant.

2. Dispositif selon la revendication 1, dans lequel la poulie, la roue ou le tambour (3 ; 18) réalise également la fonction consistant à transmettre le mouvement de coupe au fil diamant enroulé autour de la poulie, de la roue ou du tambour.

3. Dispositif selon les revendications 1 ou 2, dans lequel le matériau souple enroulé en un anneau comprend deux parties ou couches où la partie ou couche interne (20), en contact avec la poulie, la roue ou le tambour, a les fonctions consistant à serrer et renforcer les fils de renforcement noyés dans ladite partie interne dudit anneau ; la couche externe (21) a la fonction consistant à compenser l'irrégularité dans le contact entre le fil diamant et la rainure d'enroulement (5 ; 15 ; 22).

4. Dispositif selon l'une quelconque des revendications 1, 2 ou 3, dans lequel l'anneau de matériau souple se présente sous la forme d'une courroie moulée (23) prévue avec une rainure (22) sur la surface externe qui est conçue pour se coupler avec une rainure spéciale (24) découpée dans ladite poulie, roue ou tambour (25).

5. Dispositif selon la revendication 4, dans lequel la courroie moulée a des côtés inclinés afin de fournir une section transversale qui ressemble à un trapèze (23).

6. Dispositif selon l'une quelconque des revendications 1, 2 ou 3, dans lequel l'anneau de matériau souple se présente sous la forme d'une bande annulaire (16) sur la couche externe (21) de laquelle on trouve des rainures équidistances (15) pour loger deux fils diamants ou plus (2) à une distance (P) au moins nécessaire pour découper une ou plusieurs plaques à l'épaisseur minimum fournie par une machine avec une pluralité de fils de coupe adjacents.

7. Dispositif selon la revendication 6, dans lequel les rainures équidistances (15) sont placées à une distance qui est une partie (P/3) de la distance (P) entre les fils de coupe diamant de la plaque d'épaisseur minimum fournie pour la machine.

8. Dispositif selon l'une quelconque des revendications 1, 2 ou 3, dans lequel l'anneau de matériau souple se présente sous la forme d'une bande annulaire (4) sur la couche externe de laquelle, on trouve des rainures équidistances (5) pour loger au moins deux fils diamants (2) à une distance (P) au moins nécessaire pour couper une ou plusieurs plaques à l'épaisseur minimum fournie par une machine ; sur la bande, on trouve des rainures (5) pour loger la totalité des fils diamants pour les anneaux prévus sur la machine.

9. Dispositif selon l'une quelconque des revendications 6 ou 7, dans lequel la roue ou le tambour (18) a de larges rainures (17) pour loger plusieurs bandes annulaires (16) les unes le long des autres afin de fournir au moins la distance (P) nécessaire entre deux rainures (15) de bandes attenantes pour couper des plaques à l'épaisseur minimum fournie par la machine.

10. Dispositif selon la revendication 9, dans lequel la bande annulaire (4) sur sa surface interne, a des profilés longitudinaux (9) pour se coupler sur des rainures circonférentielles (10) correspondantes présentes sur la roue ou le tambour (3) et dans la roue de serrage (8) afin de maintenir sa position latérale.

11. Dispositif selon la revendication 9, dans lequel les bandes annulaires (16) sont serrées par au moins deux roues de serrage (19 ; 30) qui peuvent à leur tour être ajustées sur un support (27 ; 33) respectif en utilisant différents moyens d'ajustement (29 ; 35), chacun agissant pour ajuster sa propre base de roue.
